(19) Europäisches Patentamt
European Patent Office
Office européen des brevets

(11) **EP 3 192 145 B1**

(12) **EUROPÄISCHE PATENTSCHRIFT**

(45) Veröffentlichungstag und Bekanntmachung des Hinweises auf die Patenterteilung:
**03.03.2021 Patentblatt 2021/09**

(21) Anmeldenummer: **15757195.1**

(22) Anmeldetag: **21.08.2015**

(51) Int Cl.:
*H02J 7/00* (2006.01)     *H02J 9/00* (2006.01)

(86) Internationale Anmeldenummer:
**PCT/EP2015/069287**

(87) Internationale Veröffentlichungsnummer:
**WO 2016/037834 (17.03.2016 Gazette 2016/11)**

(54) **VERFAHREN ZUR BETRIEBSVORBEREITUNG EINES NOTENERGIESPEICHERS**

METHOD TO PREPARE A BACK UP ENERGY STORE FOR OPERATION

MÉTHODE POUR PREPARATION D'UN ACCUMULATEUR D'ÉNERGIE POUR OPÉRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.09.2014 EP 14184278**

(43) Veröffentlichungstag der Anmeldung:
**19.07.2017 Patentblatt 2017/29**

(73) Patentinhaber: **General Electric Renovables España S.L.**
**08005 Barcelona (ES)**

(72) Erfinder:
• **THEOPOLD, Tobias**
**44263 Dortmund (DE)**
• **WIESENTHAL, Thomas**
**59759 Arnsberg (DE)**
• **SCHREINER, Bjorn**
**58239 Schwerte (DE)**

(74) Vertreter: **Zimmermann & Partner Patentanwälte mbB**
**Postfach 330 920**
**80069 München (DE)**

(56) Entgegenhaltungen:
EP-A1- 1 908 622     EP-A1- 2 578 876
CA-A1- 2 448 536     DE-A1-102013 218 069
US-A- 5 362 942      US-A1- 2012 153 877

**Beschreibung**

Die Erfindung betrifft ein Verfahren zur Betriebsvorbereitung eines Notenergiespeichers mit wenigstens einem Energiespeicherelement, wobei der Notenergiespeicher zur Bereitstellung von elektrischer Notenergie für wenigstens einen Energieverbraucher ausgestaltet ist, wobei die dem Notenergiespeicher entnehmbare Energie $E_L$ und/oder die dem Notenergiespeicher entnehmbare Spitzenleistung $P_{max}$ bestimmt wird und die Betriebsbereitschaft festgestellt wird, sobald die dem Notenergiespeicher entnehmbare Energie $E_L$ einen festlegbaren Mindestenergiewert erreicht hat und/oder die dem Notenergiespeicher entnehmbare Spitzenleistung $P_{max}$ einen festlegbaren Mindestleistungswert erreicht hat.

Die Erfindung betrifft ferner ein Verfahren zur Betriebsvorbereitung eines Pitchsystems für eine Windenergieanlage, wobei das Pitchsystem wenigstens einen Notenergiespeicher mit wenigstens einem Energiespeicherelement aufweist. Die Erfindung betrifft des Weiteren ein Computerprogrammprodukt mit Programminstruktionen zur Ausführung der erfindungsgemäßen Verfahren. Die Erfindung betrifft ferner ein Pitchsystem für eine Windenergieanlage, wobei das Pitchsystem wenigstens einen Notenergiespeicher mit wenigstens einem Energiespeicherelement aufweist. Die Erfindung betrifft des Weiteren eine Windenergieanlage mit einem derartigen Pitchsystem.

Notenergiespeicher zur Energieversorgung von Energieverbrauchern mit elektrischer Energie finden in vielen Bereichen Anwendung. In der Regel sind die mit Notenergie zu versorgenden Energieverbraucher sicherheitsrelevant. Beispiele für derartige sicherheitsrelevante Energieverbraucher sind insbesondere Motoren in Personenfahrstühlen oder das Pitchsystem in einer Windenergieanlage.

Bei Ausfall des externen Netzes, wie es zum Beispiel bei einem Gebäudebrand vorkommen kann, ist es erforderlich das Personenfahrstühle ohne die vom externen Netz bereitgestellte Energie in der Lage sind zum nächstgelegenen Stockwerk zu fahren und die Türen zu öffnen, damit in dem Fahrstuhl befindliche Personen sich in Sicherheit bringen können.

Moderne Windenergieanlagen sind in der Regel mit elektrischen Pitchsystemen ausgestattet, die je Rotorblatt wenigstens einen als Pitchmotor bezeichneten Elektromotor aufweisen. Durch Rotation der Rotorblätter um ihre jeweilige Längsachse regeln derartige Pitchsysteme die Stellung der Rotorblätter zum Wind und sind häufig die einzige sichere Möglichkeit den Rotor einer Windenergieanlage zum Stillstand zu bringen. Dies geschieht dadurch, dass das Pitchsystem die Rotorblätter in die so genannte Fahnenstellung dreht und der Rotor mangels Antrieb durch den Wind zum Stillstand kommt. Die Energieversorgung des Pitchsystems erfolgt üblicherweise durch das Netz, in das die Windenergieanlage auch den erzeugten Strom einspeist. Bei Netzausfall kann sich eine Gefahrensituation beispielsweise dadurch ergeben, dass bei Zunahme des Windes die Umdrehungsgeschwindigkeit des Rotors der Windenergieanlage einen zulässigen Höchstwert überschreitet und die Windenergieanlage oder in der Nähe befindliche Personen infolgedessen Schaden nehmen könnten.

Um eine derartige Gefahrensituation auch bei Netzausfall abwenden zu können, müssen die Rotorblätter auch ohne die Energieversorgung des Pitchsystems durch das externe Netz in die Fahnenstellung verfahrbar sein. Hierzu ist aus dem Stand der Technik bekannt das Pitchsystem mit einem oder mehreren Notenergiespeichern auszustatten, die bei Netzausfall die Energieversorgung des Pitchsystems und somit die Einsatzfähigkeit des Pitchsystems gewährleisten, zumindest bis die Rotorblätter in die sichere Fahnenstellung gebracht worden sind.

Um die beschriebenen Maßnahmen während einer Notsituation ohne Energieversorgung durch das Netz durchführen zu können, muss der Energieverbraucher dem Notenergiespeicher eine Mindestenergiemenge und/oder eine Mindestleistung entnehmen können.

Bei der Entnahme von Energie aus einem Notenergiespeicher treten stets Verluste $E_V$ auf, die im Wesentlichen auf den Innenwiderstand $R_i$ des Notenergiespeichers zurückgehen. Folglich ist die in dem Notenergiespeicher gespeicherte Energie $E_C$ gleich der Summe der Verluste $E_V$ und der entnehmbaren Energie $E_L$:

$$E_C = E_V + E_L$$

Das heißt die entnehmbare Energie $E_L$ ist die Energie, die nach Abzug der unvermeidlichen Verluste $E_V$ effektiv dem Energieverbraucher zur Verfügung gestellt werden kann.

Die entnehmbare Energie $E_L$ hängt von dem angenommen Laststromverlauf $I(t)$ während einer Notsituation ab, wobei der Laststromverlauf $I(t)$ den Strom angibt, der dem Notenergiespeicher in einer Notsituation vom Energieverbraucher entnommen wird. Die entnehmbare Energie $E_L$ lässt sich somit näherungsweise als die Differenz aus der gespeicherten Energie $E_C$ und dem Zeitintegral des Produktes des Innenwiderstands $R_i$ und dem Quadrat des Laststromverlaufs $I(t)$ angeben:

$$E_L = E_C - E_V \approx E_C - \int_{t_0}^{t_1} R_i I^2(t) dt$$

Die Grenzen des Integrals sind wiederum der Startzeitpunkt $t_0$ ab dem der Energieverbraucher in einer Notsituation Energie aus dem Notenergiespeicher entnimmt und der Endzeitpunkt $t_1$ ab dem der Energieverbraucher keine Energie mehr aus dem Notenergiespeicher entnimmt. Die Näherung bei dieser Berechnung besteht darin, dass andere Verluste, als die am Innenwiderstand Ri des Notenergiespeichers anfallenden, vernachlässigt werden.

Zur Bestimmung der entnehmbaren Energie $E_L$ sind somit lediglich die im Notenergiespeicher gespeicherte Energie, der Innenwiderstand Ri und der angenommenen Laststromverlauf $I(t)$ notwendig. Die Bestimmung der entnehmbaren Energie $E_L$ des Notenergiespeichers und des Innenwiderstandes $R_i$ des Notenergiespeichers kann auf unterschiedliche Art erfolgen. Eine Methode ist das kurzzeitige Laden des Notenergiespeichers über einen gewissen Zeitraum und die Messung der Spannungsdifferenz vor und nach dem kurzzeitigen Laden und die Messung des Ladestroms. Hieraus wiederum können die dem Notenergiespeicher entnehmbare Energie $E_L$ und der Innenwiderstandes Ri des Notenergiespeichers berechnet werden. Der Vorteil der Messung der entnehmbaren Energie über einen Ladevorgang hat gegenüber einer Messung der entnehmbaren Energie über einen Entladevorgang den Vorteil dass bei gleichem Aufwand die Methode der Messung über den Ladevorgang die Kapazität des Notenergiespeichers erhöht, statt sie zu verringern.

Die dem Notenergiespeicher entnehmbare Leistung ist eine Funktion des Innenwiderstands $R_i$. Die entnehmbare Leistung ist am größten, wenn der Lastwiderstand $R_L$ dem Innenwiderstand Ri entspricht. Hierdurch ist die dem Notenergiespeicher entnehmbare Spitzenleistung $P_{max}$ definiert. Die entnehmbare Spitzenleistung $P_{max}$ ist proportional zum Kehrwert des Innenwiderstands $R_i$:

$$P_{\max} \propto \frac{1}{R_i}$$

Insbesondere Windenergieanlagen und die in ihnen verwendeten Notenergiespeicher können extremen Temperaturen ausgesetzt sein. Innerhalb von Windenergieanlagen führen besonders niedrige Temperaturen zu Problemen. Beispiele hierfür sind die Bildung von Reif oder Tauwasser, welches bei elektrischen Einrichtungen naturgemäß problematisch ist. Die elektrischen Einrichtungen können durch niedrige Temperaturen aber nicht nur indirekt, wie zum Beispiel über Tauwasser, sondern auch direkt beeinträchtigt werden. So kann insbesondere die bei leistungselektronischen Bauteilen übliche Erwärmung zu starken Temperaturdifferenzen innerhalb der elektronischen Einrichtungen führen, wodurch mechanische Spannungen verursacht werden, die beispielsweise Lötstellen schädigen können.

Auch die Energiespeicherelemente in den Notenergiespeichern werden durch niedrige Temperaturen wesentlich beeinflusst. Die meisten heutzutage verwendeten Energiespeicherelemente zeigen eine starke Erhöhung des Innenwiderstands $R_i$ mit abnehmender Temperatur. Da ein höherer Innenwiderstand $R_i$ höhere Verluste $Ev$ bedeutet, ist somit die einem Notenergiespeicher bei einer niedrigen Temperatur entnehmbare Energie $E_L$ deutlich kleiner als die bei einer höheren Temperatur entnehmbare Energie $E_L$. Das Gleiche gilt für die dem Notenergiespeicher entnehmbare Spitzenleistung $P_{max}$.

Um eine ausreichende den Notenergiespeichern entnehmbare Energie $E_L$ zu gewährleisten, wird im Stand der Technik die Luft der Schaltschränke, in denen sich die Notenergiespeicher befinden, durch Heizlüfter erwärmt, bevor eine kalte Windenergieanlage in Betrieb geht. Sobald die Luft eine voreingestellte Temperatur, zum Beispiel 5 °C, erreicht hat, wird über einen Thermoschalter ein Signal ausgegeben, der die Betriebsbereitschaft des Notenergiespeichers signalisiert. Dieser Aufwärmprozess ist relativ zeitaufwändig und verzögert somit die Inbetriebnahme einer Windenergieanlage erheblich. Ferner besteht einige Unsicherheit über die tatsächlich entnehmbare Energie $E_L$, da die Lufttemperatur nicht unbedingt eine zuverlässige Aussage über die Temperatur, insbesondere die Kerntemperatur, der Energiespeicherelemente zulässt. Daher wird häufig mit Sicherheitsaufschlägen gearbeitet. Zum Beispiel wird das Signal, das die Betriebsbereitschaft signalisiert erst bei einer Lufttemperatur im Schaltschrank von 10 statt bei 5 °C ausgegeben. Das Erreichen einer Temperatur von 10 °C im Schaltschrank garantiert jedoch noch nicht, dass auch der Notenergiespeicher diese Temperatur, oder zumindest eine Temperatur angenommen hat, bei welcher er zuverlässig funktioniert, beziehungsweise die erforderliche Mindestenergie bzw. einen entsprechend niedrigen Innenwiderstand erreicht hat, da die Erwärmung des Notenergiespeichers der Erwärmung des Schaltschranks natürlicherweise zeitverzögert folgt. Die Einkalkulierung entsprechender Sicherheitsmargen verzögert die Inbetriebnahme der Windenergieanlage weiter, was Verluste für den Betreiber der Windenergieanlage durch deren längeren Stillstand bedeutet. Gravierendere Auswirkungen wären zu befürchten, wenn die entnehmbare Energie $E_L$ anhand der Lufttemperatur zu hoch eingeschätzt würde und die Windenergieanlage in Betrieb genommen werden würde, obwohl die entnehmbare Energie $E_L$ nicht für eine Notfahrt der Rotorblätter in die Fahnenstellung ausreichte. Fiele in diesem Fall das Netz aus, blieben während einer Notfahrt die Rotorblätter zumindest teilweise im Wind stehen, wodurch bei aufkommendem starken Wind die Windenergieanlage in eine Überdrehzahl ginge und zerstört werden könnte.

Aus US 5,362,942 ist beispielsweise ein System zur Beheizung von Batterien zur Notstromversorgung von beispielsweise Automobilen oder Flugzeugen bekannt, bei dem ein Sensor die Temperatur der Batterie misst. In Abhängigkeit der Sensortemperatur wird eine Last zugeschaltet, welche den Innenwiderstand der Batterie ausnutzt um die Batterietemperatur auf einem bestimmten Niveau aufrechtzuerhalten.

Aus EP 2 578 876 A1 ist eine Windkraftanlage mit einem Notenergiespeicher bekannt, bei der eine Antriebseinheit zum Einstellen des Anstellwinkels des Rotorblatts auch im Normalbetriebsmodus zeitweise ausschließlich mit elektrischer Energie aus dem Notenergiespeicher versorgt wird, um den Notenergiespeicher auf seinen Alterungszustand hin zu überprüfen. Durch Beobachtung des Auflade- und Entladezustands kann der Alterungszustand eines Doppelschichtkondensators und insbesondere dessen Speicherinnenwiderstand exakter bestimmt werden.

EP 1 908 622 A1 beschreibt ein Fahrzeug mit einem Kondensator als Notstromversorgung. Sobald der Zündschalter abgeschaltet wird, wird der Kondensator entladen um die Lebensdauer des Kondensators zu verlängern, wobei eine geringe Restspannung verbleibt. Beim Wiedereinschalten wird zunächst die Spannung des Kondensators gemessen und dann der Ladevorgang gestartet. Während des Ladevorgangs wird der interne Widerstand des Kondensators gemessen um zu bestimmen ob der Kondensator bereits seine Alterungsgrenze erreicht hat. Um die Notstromversorgung wiederherzustellen wird der Kondensator zunächst voll aufgeladen um dann aus dem voll aufgeladenen Zustand heraus im Bedarfsfall mit der Entladung des Kondensators zur Erwärmung des Kondensators zu beginnen.

CA 2 448 536 A1 bestimmt über den Innenwiderstand von Batteriezellen, welche hierzu kurzzeitig geladen oder entladen werden, den Zustand von Notenergiespeichern. Zur Erhöhung der Batteriekapazität weist dieses System zur Notenergieversorgung auch separate Heizelemente auf. welche von den Notenergiespeichern selbst mit Strom versorgt werden.

Aus US 2012/0153877 A1 ist ein Hybridfahrzeug mit einer wiederaufladbaren Batterie und einem Kondensator, sowie einem Spannungswandler für eine Spannungswandlung zwischen Akkumulator und Kondensator bekannt, bei bekannt, bei dem ein Sensor die Temperatur der Batterie misst. In Abhängigkeit der Sensortemperatur wird eine Last zugeschaltet, welche den Innenwiderstand der Batterie ausnutzt um die Batterietemperatur auf einem bestimmten Niveau aufrechtzuerhalten.

Aus EP 2 578 876 A1 ist eine Windkraftanlage mit einem Notenergiespeicher bekannt, bei der eine Antriebseinheit zum Einstellen des Anstellwinkels des Rotorblatts auch im Normalbetriebsmodus zeitweise ausschließlich mit elektrischer Energie aus dem Notenergiespeicher versorgt wird um den Notenergiespeicher auf seinen Alterungszustand hin zu überprüfen. Durch Beobachtung des Auflade- und Entladezustands kann der Alterungszustand eines Doppelschichtkondensators und insbesondere dessen Speicherinnenwiderstand exakter bestimmt werden.

EP 1 908 622 A1 beschreibt ein Fahrzeug mit einem Kondensator als Notstromversorgung. Sobald der Zündschalter abgeschaltet wird, wird der Kondensator entladen um die Lebensdauer des Kondensators zu verlängern, wobei eine geringe Restspannung verbleibt. Beim Wiedereinschalten wird zunächst die Spannung des Kondensators gemessen und dann der Ladevorgang gestartet. Während des Ladevorgangs wird der interne Widerstand des Kondensators gemessen um zu bestimmen ob der Kondensator bereits seine Alterungsgrenze erreicht hat. Um die Notstromversorgung wiederherzustellen wird der Kondensator zunächst voll aufgeladen um dann aus dem voll aufgeladenen Zustand heraus im Bedarfsfall mit der Entladung des Kondensators zur Erwärmung des Kondensators zu beginnen.

CA 2 448 536 A1 bestimmt über den Innenwiderstand von Batteriezellen, welche hierzu kurzzeitig geladen oder entladen werden, den Zustand von Notenergiespeichern. Zur Erhöhung der Batteriekapazität weist dieses System zur Notenergieversorgung auch separate Heizelemente auf, welche von den Notenergiespeichern selbst mit Strom versorgt werden.

Aus US 2012/0153877 A1 ist ein Hybridfahrzeug mit einer wiederaufladbaren Batterie und einem Kondensator, sowie einem Spannungswandler für eine Spannungswandlung zwischen Akkumulator und Kondensator bekannt, bei dem ein Batterietemperaturmessfühler die Temperatur der Batterie misst. Insbesondere wenn die Temperatur der Batterie den Gefrierpunkt erreicht, wird die Temperatur der Batterie durch wechselseitiges Umladen der Spannung zwischen Batterie und Kondensator erhöht.

Aus DE 10 2013 218 069 A1 ist eine aus einer Lithiumbatterie gebildete Notstromversorgung für einen Verbraucher bekannt, bei welcher ein Heizkörper eine Wärmequelle für die Lithiumbatterie bildet. Ein Temperaturwächter misst die Oberflächentemperatur der Lithiumbatterie. Bevor die Lithiumbatterie in Betrieb genommen wird, erfasst ein Hauptsteuermodul die aktuelle Temperatur, die Restkapazität und den Betriebszustand des Verbrauchers. Wenn die Spannung der Batterie in Ordnung und die Temperatur der Batterie zu niedrig ist. wird der Heizkörper mit einem kleinen Strom der Lithiumbatterie erwärmt. Nachdem die Eigentemperatur der Lithiumbatterie wieder in Ordnung ist, wird die Erwärmung der Lithiumbatterie beendet und die Lithiumbatterie kann nun ordnungsgemäß verwendet werden.

Damit ist es die Aufgabe der Erfindung, ein Verfahren zur Betriebsvorbereitung eines Notenergiespeichers, ein Verfahren zur Betriebsvorbereitung eines Pitchsystems für eine Windenergieanlage und ein Computerprogrammprodukt anzugeben, die auch bei niedriger Ausgangstemperatur des Notenergiespeichers anwendbar sind, sowie ein Pitchsystem und eine Windenergieanlage anzugeben, die auch bei niedriger Ausgangstemperatur schnell und sicher betriebsbereit sind.

Die zuvor hergeleitete und aufgezeigte Aufgabe ist ausgehend von dem eingangs beschriebenen Verfahren zur Betriebsvorbereitung eines Notenergiespeichers durch die Merkmale der unabhängigen Ansprüche 1, 13, 14 und 15 gelöst.

Die Erfindung macht sich den ansonsten nachteiligen Effekt des steigenden Innenwiderstandes $R_i$ bei niedrigen Temperaturen zu Nutze, um durch ein Entladen des Notenergiespeichers den Notenergiespeicher von innen zu erwärmen. Durch die Erwärmung des Notenergiespeichers verringert sich der Innenwiderstand $R_i$. Da der Innenwiderstand $R_i$ für einen wesentlichen Teil der Verluste $E_V$ verantwortlich ist, verringern sich diese ebenfalls mit Erwärmung des Notenergiespeichers. Entsprechend nimmt die dem Notenergiespeicher entnehmbare Spitzenleistung $P_{max}$ durch die Verringerung des Innenwiderstands $R_i$ zu.

An Stelle zu warten, bis der Notenergiespeicher durch externe Wärmequellen, wie zum Beispiel einen Heizlüfter aufgewärmt wird, kann der Notenergiespeicher ausschließlich bzw. auch zusätzlich von Innen erwärmt werden. Alternativ zu einer Temperaturmessung kann der Innenwiderstand Ri des Notenergiespeichers bestimmt werden, und die Erwärmung des Notenergiespeichers vom Unterschreiten eines für den Innenwiderstand R, des Notenergiespeichers vorgegebenen Grenzwertes abhängig gemacht werden. Bei einer vorteilhaften Ausgestaltung der Erfindung ist vorgesehen, dass wenigstens eine physikalischen Größe, die eine Aussage über die Kerntemperatur des einen Energiespeicherelements oder der mehreren Energiespeicherelemente des Notenergiespeichers zulässt, gemessen wird, die Kerntemperatur auf Grundlage der physikalischen Größe oder der physikalischen Größen berechnet wird und das Entladen des Notenergiespeichers mindestens solange erfolgt, bis die Kerntemperatur einen festlegbaren Temperaturschwellwert erreicht hat. Dies bietet gegenüber der aus dem Stand der Technik bekannten Methode die Lufttemperatur zu bestimmen, eine deutlich aussagekräftigere Möglichkeit zur Temperaturbestimmung. Die Betriebsbereitschaft gilt hierbei erst dann als festgestellt, wenn der Temperaturschwellwert erreicht wird, das heißt die Inbetriebnahme des Notenergiespeichers kann erst dann erfolgen.

Alternativ kann der Notenergiespeicher zur Betriebsvorbereitung grundsätzlich immer für eine feste Zeitspanne entladen werden, wobei die Zeitspanne so gewählt ist, dass eine ausreichende Erwärmung des Notenergiespeichers sichergestellt ist. Die gewählte Zeitspanne ist hierbei von den Kenndaten des Notenergiespeichers abhängig.

Gemäß einer weiteren vorteilhaften Ausgestaltung der Erfindung ist vorgesehen, dass bei der Berechnung der Kerntemperatur Alterungseffekte des Notenergiespeichers, die den Zusammenhang zwischen der physikalischen Größe oder den physikalischen Größen und der Kerntemperatur verändern, berücksichtigt werden. Der Zusammenhang zwischen der physikalischen Größe oder den physikalischen Größen und der Kerntemperatur kann sich mit der Zeit und/oder mit der Anzahl der Lade/Entladezyklen des Notenergiespeichers verändern. Die Art und der Umfang dieser Veränderungen ist häufig bekannt und kann somit bei der Berechnung der Kerntemperatur berücksichtigt werden, wodurch sich die Genauigkeit der Berechnung auch bei gealterten Notenergiespeichern aufrechterhalten lässt.

Bei einer besonders vorteilhaften Ausgestaltung der Erfindung ist vorgesehen, dass die physikalische Größe oder die physikalischen Größen die Kapazität C des Notenergiespeichers und/oder den Innenwiderstand Ri des Notenergiespeichers umfassen. Wie bereits beschreiben zeigt der Innenwiderstand $R_i$ eine deutliche Temperaturabhängigkeit, somit kann ausgehend vom Innenwiderstand $R_i$ auf die Temperatur des Notenergiespeichers bzw. der Energiespeicherelemente geschlossen werden. Darüber hinaus ist auch die Kapazität C temperaturabhängig und kann auf analoge Weise zur Bestimmung der Temperatur des Notenergiespeichers bzw. der Energiespeicherelemente herangezogen werden.

Besonders bevorzugt wird während des Entladens die dem Notenergiespeicher entnehmbare Energie $E_L$ und/oder die dem Notenergiespeicher entnehmbare Spitzenleistung $P_{max}$ kontinuierlich bestimmt. Hierdurch wird sichergestellt, dass der Notenergiespeicher nur soweit wie nötig entladen wird. Je nach den konkreten Gegebenheiten kann durch den Entladevorgang der Notenergiespeicher bereits soweit erwärmt sein, dass bereits ohne erneute Aufladung ausreichend Restenergie/Restleistung für einen Notbetrieb zur Verfügung steht. Durch diese Maßnahme ist sichergestellt dass der Betriebszustand in der kürzest möglichen Zeit erreicht wird. Alternativ kann das Entladen des Notenergiespeichers für einen vorbestimmten Zeitraum erfolgen, oder bis eine vorbestimmte Energiemenge dem Notenergiespeicher entnommen worden ist.

Vorzugsweise wird der Notenergiespeicher über die Entladeeinrichtung mit einem Lastwiderstand $R_L$ belastet, der kleiner als der Innenwiderstand Ri des Notenergiespeichers ist, insbesondere höchstens halb so groß wie der Innenwiderstand $R_i$ ist, besonders bevorzugt höchstens zehn Prozent des Innenwiderstands $R_i$ beträgt. Auf diese Weise wird der Großteil der dem Notenergiespeicher beim Entladen entnommenen Energie am Innenwiderstand $R_i$ in Wärme umgewandelt.

Gemäß einer vorteilhaften Weiterbildung der Erfindung ist vorgesehen, dass der Notenergiespeicher geladen wird, wenn die erneute Bestimmung zum Ergebnis hatte, dass die dem Notenergiespeicher entnehmbare Energie $E_L$ einen festlegbaren Mindestenergiewert nicht erreicht hat und/oder die dem Notenergiespeicher entnehmbare Spitzenleistung $P_{max}$ einen festlegbaren Mindestleistungswert nicht erreicht. Für den Fall, dass durch das Entladen des Notenergiespeichers alleine nicht die notwendige Mindestenergie und/oder nicht die notwendige Mindestleistung erreicht werden, kann durch einfaches Laden des Notenergiespeichers dieses Ziel bzw. diese Ziele dennoch erreicht werden. Der Notenergiespeicher kann zum Beispiel für einen vorbestimmten Zeitraum, mit einer vorbestimmten Energiemenge oder bis zu einem vorbestimmten Level geladen werden, wobei das Level insbesondere mindestens 80 %, vorzugsweise mindestens 90 % und besonders bevorzugt mindestens 95 % der maximal im Notenergiespeicher speicherbaren Energiemenge beträgt.

Sofern der Notenergiespeicher zu Beginn des erfindungsgemäßen Verfahrens nur eine sehr geringe Energiemenge enthält oder sogar vollständig entladen ist, ist es vorteilhaft, den Notenergiespeicher zunächst zu Laden, um das darauffolgende Entladen des Notenergiespeichers zu ermöglichen. Eine vorteilhafte Ausgestaltung der Erfindung zeichnet sich dadurch aus, dass vor dem Entladen des Notenergiespeichers der Notenergiespeicher nur um den Betrag geladen wird, der notwendig ist, dass nach dem Entladen des Notenergiespeichers zum Zwecke der Erwärmung des Notenergiespeichers wenigstens so viel Restenergie vorhanden ist, dass die Betriebsbereitschaft erreicht ist. Zum Laden des Notenergiespeichers ist vorzugsweise eine Ladeeinrichtung vorgesehen.

Die Ladeeinrichtung kann zum Beispiel durch einen Gleichrichter gebildet werden, der den Wechselstrom eines Versorgungsnetzes in einen Gleichstrom gleichrichtet. Insbesondere kann die Ladeeinrichtung auch durch den Energieverbraucher selbst gebildet werden, wenn dieser beispielsweise einen Motor aufweist, der auch als Generator betreibbar ist und durch den Energie in den Notenergiespeicher speisbar ist.

Gemäß einer besonders vorteilhaften Weiterbildung der Erfindung ist vorgesehen, dass das Laden des Notenergiespeichers höchstens mit dem maximal zulässigen Ladestrom des Notenergiespeichers erfolgt. Durch diese Strombegrenzung wird der Notenergiespeicher vor Überlastungen geschützt und die Lebensdauer des Notenergiespeichers erhöht.

Bei einer bevorzugten Ausgestaltung der Erfindung ist vorgesehen, dass die Entladeeinrichtung den einen Energieverbraucher oder wenigstens einen der Energieverbraucher umfasst. Somit kann der eine Energieverbraucher oder wenigstens einer der Energieverbraucher als Lastwiderstand fungieren über den der Notenergiespeicher entladen werden kann. Hierdurch kann auf einen separaten Lastwiderstand, der lediglich dem Entladen des Notenergiespeichers dient, verzichtet werden. Wenn der Energieverbraucher beispielsweise ein Elektromotor eines Pitchsystems ist, kann bei dem Entladen des Notenergiespeichers über den Elektromotor nicht nur der Notenergiespeicher erwärmt werden, sondern gleichzeitig auch der Elektromotor erwärmt und somit auf den bevorstehenden Betrieb vorbereitet werden. Ist ferner ein Bremswiderstand, auch Bremschopper genannt, vorhanden, der der Dissipation überschüssiger Energie dient, kann auch dieser Bremswiderstand als Lastwiderstand fungieren.

Bei einer weiteren bevorzugten Ausgestaltung der Erfindung ist vorgesehen, dass die Entladeeinrichtung wenigstens einen Heizwiderstand aufweist, deren Abwärme wiederum zum direkten oder indirekten Heizen des Notenergiespeichers verwendet wird. Der Heizwiderstand kann beispielsweise in unmittelbare Nähe des Notenergiespeichers angeordnet sein, im direkten Kontakt mit dem Notenergiespeicher stehen oder gleichzeitig als Heizwiderstand eines Heizlüfters fungieren. Hierdurch wird nicht nur die beim Entladen des Notenergiespeichers am Innenwiderstand anfallende Wärme zum Erwärmen des Notenergiespeichers genutzt, sondern auch die in der Entladeeinrichtung in Wärme umgewandelte elektrische Leistung.

Gemäß einer weiteren bevorzugten Ausgestaltung der Erfindung ist vorgesehen, dass die Energiespeicherelemente Kondensatoren, insbesondere Ultrakondensatoren aufweisen. Die Notenergiespeicher können sowohl eine einzelne Kondensatorzelle als auch eine Parallelschaltung und/oder Reihenschaltung von mehreren Kondensatorzellen aufweisen. Die Kapazität C des Notenergiespeichers bezeichnet bei mehreren miteinander verschalteten Kondensatorzellen somit die resultierende Gesamtkapazität C der miteinander verschalteten Kondensatorzellen.

Der Begriff Ultrakondensatoren umfasst elektrochemische Kondensatoren, die sowohl eine Doppelschichtkapazität als auch eine Pseudokapazität aufweisen. Teilweise wird auch der Begriff Superkondensatoren verwendet. Je nachdem welche der beiden Kapazitäten überwiegt, werden die Ultrakondensatoren in eine von drei Familien eingeordnet. Als Doppelschichtkondensatoren oder EDLC (electric double-layer capacitor) werden Ultrakondensatoren bezeichnet, bei denen die Doppelschichtkapazität überwiegt. Als Pseudokondensatoren werden Ultrakondensatoren bezeichnet, bei denen die Pseudokapazität überwiegt. Als Hybridkondensatoren werden Ultrakondensatoren bezeichnet, bei denen die Doppelschichtkapazität und die Pseudokapazität in etwa gleichem Maße zur Gesamtkapazität C des Ultrakondensators beitragen. Der Einfluss der Temperatur auf den Innenwiderstand $R_i$ ist bei Kondensatoren besonders deutlich und ist zumeist am stärksten bei Temperaturen von unter 0 °C.

Die Bestimmung der Kapazität $C$ des Notenergiespeichers kann ebenso wie die Bestimmung des Innenwiderstandes $R_i$ des Notenergiespeichers durch das kurzzeitige Entladen des Notenergiespeichers über einen Widerstand und die Messung der Spannung und des Entladestroms erfolgen.

Die in dem Notenergiespeicher gespeicherte Energie Ec ergibt sich somit zu:

$$E_C = \frac{1}{2} C U_L^2$$

Die in diese Berechnung einfließende Ladespannung $U_L$ ist ebenfalls durch einfachste Messungen bestimmbar. Die entnehmbare Energie $E_L$ lässt sich demnach gemäß der eingangs beschriebenen Näherung wie folgt berechnen:

$$E_L = E_C - E_V \approx \frac{1}{2} C U_L^2 - \int_{t_0}^{t_1} R_i I^2(t) dt$$

Darüber hinaus ist es vorteilhaft, wenn der Entladestrom auf einen Höchstwert begrenzt wird, wobei insbesondere der Höchstwert ein Wert kleiner oder gleich der maximal zulässigen Verlustleistung der Entladeeinrichtung gewählt ist. Auf diese Weise wird die Entladeeinrichtung vor Überlastungen geschützt.

Bei noch kaltem Notenergiespeicher kann insbesondere dessen Innenwiderstand $R_i$ so hoch sein, dass zu Beginn des Entladevorgangs der Entladestrom so gering ist, dass eine Überbelastung zunächst ausgeschlossen ist. Mit sich erwärmenden Notenergiespeicher und dem damit verbundenen Absinken des Innenwiderstands Ri des Notenergiespeichers kann dann mit der Zeit der Entladestrom jedoch so groß werden, dass die Verlustleistung an dem, beziehungsweise den Lastwiderständen, wie der Motorwicklung des Pitchmotors und/oder dem Bremschopper zu groß wird. Diese Lastwiderstände sind ursprünglich ja für einen anderen Zweck und somit für andere Belastungen dimensioniert worden. Gemäß einer weiteren bevorzugten Weiterbildung der Erfindung ist vorgesehen, dass die Begrenzung des Entladestroms durch eine Pulsweitenmodulation erfolgt, wobei insbesondere der Spitzenentladestrom auf den maximal zulässigen Pulsstrom des Stromkreises umfassend den Notenergiespeicher und die Entladeeinrichtung beschränkt wird. Der Entladestrom ist hierbei die über mehrere Pulse gemittelte resultierende Stromstärke. Der Spitzenentladestrom bezeichnet die maximale Stromstärke, den ein einzelner Puls der Pulsweitenmodulation erreicht.

Die zuvor hergeleitete und aufgezeigte Aufgabe ist ausgehend von dem eingangs beschriebenen Verfahren zur Betriebsvorbereitung eines Pitchsystems für eine Windenergieanlage dadurch gelöst, dass eines der zuvor beschriebenen Verfahren auf den einen Notenergiespeicher oder wenigstens einen der Notenergiespeicher des Pitchsystems angewendet wird. Die zuvor hergeleitete und aufgezeigte Aufgabe ist ausgehend von dem eingangs beschriebenen Pitchsystem dadurch gelöst, dass das Pitchsystem zur Ausführung des vorgenannten Verfahrens ausgestaltet ist. Die zuvor hergeleitete und aufgezeigte Aufgabe ist ausgehend von der eingangs beschriebenen Windenergieanlage dadurch gelöst, dass die Windenergieanlage ein derartiges Pitchsystem umfasst.

Die Ausführung der einzelnen Verfahrensschritte der erfindungsgemäßen Verfahren kann zum Beispiel durch ein Computerprogramm erfolgen, welches auf einem Speichermedium, wie zum Beispiel einem Halbleiterspeicher, einem magnetischen Speicher oder einem optischen Speicher, gespeichert ist und durch eine Steuerungseinrichtung verarbeitet wird.

Im Einzelnen gibt es nun eine Vielzahl von Möglichkeiten, das erfindungsgemäße Verfahren zur Betriebsvorbereitung eines Notenergiespeichers auszugestalten und weiterzubilden. Dazu wird auf die dem Patentanspruch 1 nachgeordneten Patentansprüche sowie auf die dem Patentanspruch 1 nachgeordneten Patentansprüche sowie auf die nachfolgende detaillierte Beschreibung bevorzugter Ausführungsbeispiele der Erfindung verwiesen.

Der Zusammenhang zwischen der Temperatur T eines Energiespeicherelements und seinem Innenwiderstand R,. zeigt sich darin, dass bei Unterschreiten einer gewissen Temperatur T der Innenwiderstand R, stark ansteigt. Die Temperatur T, ab der der Innenwiderstand R, stark ansteigt, ist vom Typ des Energiespeicherelements abhängig. Für Ultrakondensatoren liegt diese Temperatur T häufig im Bereich um 0, je nach Bautyp ist aber der Innwiderstand unter Umständen auch schon ab -15 °C ausreichend um einen sicheren Notbetrieb zu ermöglichen. Die Temperatur hängt somit von den Eigenschaften des gewählten Notenergiespeichers und der sonstigen Dimensionierung des Pitchantriebs ab und sollte daher für jeden Bautyp individuell gewählt werden.

In einer bevorzugten Ausgestaltung des erfindungsgemäßen Verfahrens wird nach dem Start des Verfahrens zunächst der Notenergiespeicher geladen, um sicherzustellen, dass ausreichend Energie für die weiteren Verfahrensschritte im Notenergiespeicher gespeichert ist. Dieser Verfahrensschritt kann insbesondere dann wegfallen, wenn davon ausgegangen werden kann, dass bereits ausreichend Energie für die weiteren Verfahrensschritte im Notenergiespeicher, zum Beispiel aus einer vorangegangenen Inbetriebnahme gespeichert ist, und die Anlage nach nur einer kurzen Unterbrechung, zum Beispiel nach Wartungsarbeiten wieder in Betrieb genommen wird.

Im nächsten Schritt wird die dem Notenergiespeicher entnehmbare Energie EL und/oder die dem Notenergiespeicher entnehmbare Spitzenleistung $P_{MAX}$ bestimmt. Die Bestimmung der dem Notenergiespeicher entnehmbaren Spitzenleistung $P_{MAX}$ kann vorzugsweise durch Methoden vorgenommen werden, die eine totale Entladung des Notenergiespeichers nicht erforderlich machen. Bei Kondensatoren als Notenergiespeicher besteht im Gegensatz zu chemischen Notenergiespeichern, wie zum Beispiel Bleisäureakkumulatoren, ein direkter Zusammenhang zwischen Spannungsdifferenz zu Beginn und am Ende eines partiellen Entladevorgangs und der entnommenen Leistung, so dass schon aus einer Entladezeit beziehungsweise Ladezeit von wenigen Sekunden zuverlässig auf die gespeicherte Restenergie geschlossen werden kann. Da der Notenergiespeicher nur für wenige Sekunden mit dem Entladestrom belastet wurde, kann bei einer Messung über den Entladevorgang durchaus noch genügend Restenergie vorhanden sein, die ein erneutes Aufladen nicht unmittelbar erforderlich machen. Vorzugsweise erfolgt die Kapazitätsbestimmung jedoch über einen Ladevorgang so dass dem Notenergiespeicher Energie zugeführt wird an Stelle dem Notenergiespeicher Energie zu entziehen.

Wenn die Bestimmung der im Notenergiespeicher entnehmbaren Energie $E_L$ und/oder die dem Notenergiespeicher entnehmbare Spitzenleistung $P_{max}$ zum Ergebnis hatte, dass die dem Notenergiespeicher entnehmbare Energie $E_L$ einen festlegbaren Mindestenergiewert erreicht hat und/oder die dem Notenergiespeicher entnehmbare Spitzenleistung $P_{max}$ einen festlegbaren Mindestleistungswert erreicht hat, dann wird bereits die Betriebsbereitschaft festgestellt und insbesondere ein Signal an eine übergeordnete Steuereinrichtung ausgegeben, wobei das Signal die Betriebsbereitschaft signalisiert.

Wenn die Bestimmung zum Ergebnis hatte, dass die dem Notenergiespeicher entnehmbare Energie $E_L$ einen festlegbaren Mindestenergiewert nicht erreicht hat und/oder die dem Notenergiespeicher entnehmbare Spitzenleistung $P_{MAX}$ einen festlegbaren Mindestleistungswert nicht erreicht hat, dann wird zunächst der Notenergiespeicher über eine Entladeeinrichtung zum Erwärmen des Notenergiespeichers über seinen Innenwiderstand R, entladen. Hierauf wird die dem Notenergiespeicher entnehmbare Energie $E_L$ und/oder die dem Notenergiespeicher entnehmbare Spitzenleistung $P_{MAX}$ erneut bestimmt. Diese Vorgehensweise wärmt den Notenergiespeicher auf, unabhängig davon, ob der Notenergiespeicher eine zu niedrige Temperatur aufweist oder nicht. Dieses Verfahren kann immer dann angewandt werden, wenn durch die Kenndaten des Notenergiespeichers sichergestellt ist, dass sich der Notenergiespeicher durch eine einmalige Entladung nicht überhitzen kann. Dies ist immer dann der Fall wenn der Lastwiderstand hoch genug ist um den Entladestrom derart zu begrenzen, dass eine Überhitzung des Notenergiespeichers ausgeschlossen ist. Wird zum Beispiel als Entladewiderstand der sogenannte Brems-chopper gewählt, dann ist der Brems-chopper nicht nur selbst auf diese Belastung natürlicherweise ausgelegt, sondern verhindert mit einem Widerstand von typischerweise 10 Ohm, wie er für einen Motor von 7kW üblich ist, eine Überlastung des Notenergiespeichers, ohne dass es hierzu zusätzlicher Maßnahmen bedarf.

Alternativ kann vor einer Entscheidung ob der Notenergiespeicher zur Erwärmung des Notenergiespeichers über dessen Innenwiderstand R, zunächst entladen werden soll, oder gleich mit der Aufladung, ohne vorhergehende Entladung begonnen werden soll, diese Entscheidung vom Unterschreiten einer gemessenen Temperatur, beispielsweise der Temperatur innerhalb des Gehäuses, in der der Notenergiespeicher untergebracht ist, und/oder des Innenwiderstands R, des Notenergiespeichers abhängig gemacht werden.

Üblicherweise ist zwischen einem Netzanschluss und den Motoren ein Umrichter vorgesehen, welcher beispielsweise eine Zwischenkreisspannung von 420 Volt bereitstellt. In diesem Fall ist der Notenergiespeicher üblicherweise primärseitig am Wechselrichter angeordnet, während die Motoren, und damit die potentiellen Lastwiderstände sekundärseitig am Wechselrichter angeschlossen sind. Zur Zeit der Anmeldung erhältliche Superkondensatoren weisen zum Beispiel bei einer Temperatur von -40°C einen Innenwiderstand von 0,08 Ohm auf. Bei einem Pitchmotor für eine Leistung von 7 kW beträgt der Widerstand der Wicklung typischerweise 0,2 Ohm. Wird die Bank aus Superkondensatoren mit der Wicklung des Pitchmotors belastet würde sich zu Beginn der Entladung des -40°C kalten Notenergiespeichers ungefähr eine Entladestrom von 150 Ampere an Stelle der für die Kondensatoren zulässigen 30 Ampere einstellen. Durch eine Pulsweitenmodulierung mit Anfangs 20%, z.B. Zuschalten des Lastwiderstands für eine Taktperiode des Umrichters und eine Wartezeit von vier Taktperioden bis zur nächsten Einschaltperiode kann der Entladestrom im Mittel auf 30 Ampere begrenzt werden. Bei einer typischen Anwendung kann die Schaltfrequenz des Umrichters beispielsweise 8KHz betragen, so dass die Wicklung des Pitchmotors anfangs beispielsweise wechselweise für 125 Mikro Sekunden zugeschaltet wird und dann für eine Zeitdauer von 500 Mikro Sekunden von der Notenergieeinrichtung getrennt wird.

Auf Grund einer typischen Wärmekapazität einer Superkondensatorzelle von 60 Ws/K und einem typischen Wärmewiderstand von 11 KAV kann bei einem mittleren Entladestrom von 30 Ampere die Kerntemperatur der Superkondensatoren innerhalb von 1000 Sekunden um ca. 30 K, also auf eine Betriebstemperatur von -15°C angehoben werden. Bei dem in diesem Ausführungsbeispiel gewählten Kondensatortyp kann das System bei dieser Temperatur dann in Betrieb gehen da die Zelle weitestgehend ihre ursprüngliche Kapazität sowie einen ausreichend geringen Innenwiderstand erreicht hat.

Alternativ kann die erneute Bestimmung auch kontinuierlich während des Entladens erfolgen, so dass das die beiden Verfahrensschritte im Wesentlichen parallel ablaufen. Wenn die erneute Bestimmung zum Ergebnis hat, dass die dem Notenergiespeicher entnehmbare Energie $E_L$ einen festlegbaren Mindestenergiewert erreicht hat und/oder die dem Notenergiespeicher entnehmbare Spitzenleistung $P_{MAX}$ einen festlegbaren Mindestleistungswert erreicht hat, dann wird die Betriebsbereitschaft festgestellt und insbesondere ein Signal an eine übergeordnete Steuereinrichtung ausgegeben, wobei das Signal die Betriebsbereitschaft signalisiert.

Wenn die erneute Bestimmung zum Ergebnis hatte, dass die dem Notenergiespeicher entnehmbare Energie $E_L$ einen festlegbaren Mindestenergiewert nicht erreicht hat und/oder die dem Notenergiespeicher entnehmbare Spitzenleistung $P_{max}$ einen festlegbaren Mindestleistungswert nicht erreicht hat, wird der Notenergiespeicher geladen. Das Laden kann zum Beispiel solange erfolgen bis der Notenergiespeicher zu 90 % geladen ist. Danach wird die dem Notenergiespeicher entnehmbare Energie $E_L$ und/oder die dem Notenergiespeicher entnehmbare Spitzenleistung $P_{max}$ erneut bestimmt.

Die durch diese Schritte gebildete Schleife wird solange durchlaufen, bis eine der Bestimmungen zum Ergebnis hat, dass die dem Notenergiespeicher entnehmbare Energie EL einen festlegbaren Mindestenergiewert erreicht hat und/oder die dem Notenergiespeicher entnehmbare Spitzenleistung $P_{MAX}$ einen festlegbaren Mindestleistungswert erreicht hat. Alternativ kann die Schleife nach einer vorgegebenen maximalen Anzahl von Durchgängen unterbrochen und ein Fehlersignal an eine Steuerungseinrichtung ausgegeben werden. So kann beispielsweise, wenn nach einhundert Schleifendurchgängen der Notenergiespeicher nicht über die geforderte Mindestenergie verfügt daraus geschlossen werden, dass der Notenergiespeicher das Ende seiner Lebensdauer erreicht hat. Mit dem Fehlersignal kann dann ein Techniker informiert werden, der den Austausch des Notenergiespeichers vornehmen muss, bevor die Anlage wieder in Betrieb gehen darf.

Wird das erfindungsgemäße Verfahren zum Beispiel in einem Anwendungsbereich angewendet, in dem lediglich die dem Notenergiespeicher entnehmbare Energie $E_L$ relevant ist und die dem Notenergiespeicher entnehmbare Spitzenleistung $P_{max}$ keine Rolle spielt, wird bei der Bestimmung auch nur die dem Notenergiespeicher entnehmbare Energie $E_L$ bestimmt und die Betriebsbereitschaft festgestellt, sobald die dem Notenergiespeicher entnehmbare Energie $E_L$ den festgelegten Mindestenergiewert erreicht hat.

Der Notenergiespeicher weiset eine Mehrzahl an Energiespeicherelementen auf. Der Notenergiespeicher ist zur Bereitstellung von elektrischer Notenergie für einen Energieverbraucher mit diesem verbunden. Ferner ist der Notenergiespeicher noch mit einer Entladeeinrichtung und einer Ladeeinrichtung verbunden. Über die Entladeeinrichtung kann der Notenergiespeicher zur Erwärmung entladen werden. Die Ladeeinrichtung dient dem Laden des Notenergiespeichers. Zusätzlich ist eine Steuerungseinrichtung vorgesehen, die dazu eingerichtet ist Programminstruktionen zur Ausführung des erfindungsgemäßen Verfahrens zu verarbeiten. Hierzu kann ein Computerprogramm mit entsprechenden Programminstruktionen in einem Datenspeicher der Steuerungseinrichtung gespeichert sein. Die Steuerungseinrichtung ist über Signalleitungen mit den übrigen Komponenten zum Austausch von Steuersignalen verbunden. Im Rahmen der Erfindung können zwei oder mehr Komponenten auch in einem Bauteil zusammengefasst sein. Ein einzelnes Bauteil kann auch die Aufgaben mehrerer Komponenten übernehmen. So kann zum Beispiel ein elektrischer Motor gleichzeitig den Energieverbraucher, die Entladeeinrichtung und im generatorischen Betrieb sogar die Ladeeinrichtung bilden.

**Patentansprüche**

1. Verfahren zur Betriebsvorbereitung eines Notenergiespeichers mit wenigstens einem Energiespeicherelement, wobei der Notenergiespeicher zur Bereitstellung von elektrischer Notenergie für wenigstens einen Energieverbraucher ausgestaltet ist, wobei die dem Notenergiespeicher entnehmbare Energie EL und/oder die dem Notenergiespeicher entnehmbare Spitzenleistung Pmax bestimmt wird und die Betriebsbereitschaft festgestellt wird, sobald die dem Notenergiespeicher entnehmbare Energie EL einen festlegbaren Mindestenergiewert erreicht hat und/oder die dem Notenergiespeicher entnehmbare Spitzenleistung Pmax einen festlegbaren Mindestleistungswert erreicht hat,

**dadurch gekennzeichnet, dass**

die dem Notenergiespeicher entnehmbare Energie EL und/oder die dem Notenergiespeicher entnehmbare Spitzenleistung Pmax bestimmt wird durch eine Messung eines Entladevorgangs oder über einen Ladevorgang,

und dass

wenn die Bestimmung zum Ergebnis hatte, dass die dem Notenergiespeicher entnehmbare Energie EL einen festlegbaren Mindestenergiewert nicht erreicht hat und/oder die dem Notenergiespeicher entnehmbare Spitzenleistung Pmax einen festlegbaren Mindestleistungswert nicht erreicht hat, zunächst der Notenergiespeicher über eine Entladeeinrichtung entladen wird, um die beim Entladen des Notenergiespeichers an dessen Innenwiderstand Ri anfallende Wärme zum Erwärmen des Notenergiespeichers zu nutzen, unabhängig davon, ob der Notenergiespeicher eine zu niedrige Temperatur aufweist oder nicht.

2. Verfahren zur Betriebsvorbereitung eines Notenergiespeichers nach Anspruch 1, **dadurch gekennzeichnet, dass** die dem Notenergiespeicher entnehmbare Energie EL und/oder die dem Notenergiespeicher entnehmbare Spitzenleistung Pmax nach dem Entladen des Notenergiespeichers zum Erwärmen des Notenergiespeichers erneut bestimmt wird und dass der Notenergiespeicher nachgeladen wird, wenn die erneute Bestimmung der dem Notenergiespeicher entnehmbare Energie EL und/oder die dem Notenergiespeicher entnehmbare Spitzenleistung Pmax zum Ergebnis hatte, dass die dem Notenergiespeicher entnehmbare Energie EL einen festlegbaren Mindestenergiewert nicht erreicht hat und/oder die dem Notenergiespeicher entnehmbare Spitzenleistung P max einen festlegbaren Mindestleistungswert nicht erreicht hat.

3. Verfahren zur Betriebsvorbereitung eines Notenergiespeichers nach Anspruch 1 oder 2, **dadurch gekennzeichnet, dass** der Entladevorgang des Notenergiespeichers für eine festgelegte Zeitspanne erfolgt oder dass die Zeitspanne bei jedem Entladevorgang im Einzelfall neu bestimmt wird.

4. Verfahren zur Betriebsvorbereitung eines Notenergiespeichers nach einem der vorangegangenen Ansprüche, **dadurch gekennzeichnet, dass** die Bestimmung der dem Notenergiespeicher entnehmbare Energie EL und/oder die dem Notenergiespeicher entnehmbare Spitzenleistung Pmax während des Entladens kontinuierlich bestimmt wird.

5. Verfahren zur Betriebsvorbereitung eines Notenergiespeichers nach einem der vorangegangenen Ansprüche, **dadurch gekennzeichnet, dass** vor dem Entladen des Notenergiespeichers der Notenergiespeicher um einen Betrag geladen wird, so dass nach dem Entladen des Notenergiespeichers zum Erwärmen des Notenergiespeichers die dem Notenergiespeicher entnehmbare Energie EL und/oder die dem Notenergiespeicher entnehmbare Spitzenleistung Pmax ausreicht um die Betriebsbereitschaft festzustellen.

6. Verfahren zur Betriebsvorbereitung eines Notenergiespeichers nach einem der vorangegangenen Ansprüche, **dadurch gekennzeichnet, dass** die Entladeeinrichtung den einen Energieverbraucher oder wenigstens einen der Energieverbraucher umfasst.

7. Verfahren zur Betriebsvorbereitung eines Notenergiespeichers nach einem der vorangegangenen Ansprüche, **dadurch gekennzeichnet, dass** die Begrenzung des Entladestroms durch eine Pulsweitenmodulation erfolgt, wobei insbesondere der Spitzenentladestrom auf den maximal zulässigen Pulsstrom des Stromkreises umfassend den Notenergiespeicher und die Entladeeinrichtung beschränkt wird.

8. Verfahren zur Betriebsvorbereitung eines Notenergiespeichers nach einem der vorangegangenen Ansprüche, **dadurch gekennzeichnet, dass** wenigstens eine physikalischen Größe, die eine Aussage über die Kerntemperatur des einen Energiespeicherelements oder der mehreren Energiespeicherelemente des Notenergiespeichers zulässt, gemessen wird, die Kerntemperatur auf Grundlage der physikalischen Größe oder der physikalischen Größen berechnet wird und das Entladen des Notenergiespeichers mindestens solange erfolgt, bis die Kerntemperatur einen festlegbaren Temperaturschwellwert erreicht hat.

9. Verfahren zur Betriebsvorbereitung eines Notenergiespeichers nach Anspruch 8, **dadurch gekennzeichnet, dass** bei der Berechnung der Kerntemperatur Alterungseffekte des Notenergiespeichers, die den Zusammenhang zwischen der physikalischen Größe oder den physikalischen Größen und der Kerntemperatur verändern, berücksichtigt werden.

10. Verfahren zur Betriebsvorbereitung eines Notenergiespeichers nach einem der Ansprüche 8 bis 9, **dadurch gekennzeichnet, dass** die physikalische Größe oder die physikalischen Größen die Kapazität C des Notenergiespeichers und/oder den Innenwiderstand Ri des Notenergiespeichers umfassen.

11. Verfahren zur Betriebsvorbereitung eines Notenergiespeichers nach einem der vorangegangenen Ansprüche, **dadurch gekennzeichnet, dass** die Energiespeicherelemente Kondensatoren, insbesondere Ultrakondensatoren aufweisen.

12. Verfahren zur Betriebsvorbereitung eines Pitchsystems für eine Windenergieanlage, wobei das Pitchsystem wenigstens einen Notenergiespeicher mit wenigstens einem Energiespeicherelement aufweist,
**dadurch gekennzeichnet, dass**
ein Verfahren nach einem der Patentansprüche 1 bis 11 auf den einen Notenergiespeicher oder wenigstens einen der Notenergiespeicher des Pitchsystems angewendet wird.

13. Computerprogrammprodukt mit Programminstruktionen zur Ausführung eines Verfahrens nach einem der vorhergehenden Ansprüche.

14. Pitchsystem für eine Windenergieanlage, wobei das Pitchsystem wenigstens einen Notenergiespeicher mit wenigstens einem Energiespeicherelement aufweist,
**dadurch gekennzeichnet, dass**
das Pitchsystem zur Ausführung des Verfahrens nach Anspruch 12 ausgestaltet ist.

15. Windenergieanlage mit einem Pitchsystem nach Anspruch 14.

**Claims**

1. Method to prepare a backup energy store for operation, said store having at least one energy storage element, wherein the backup energy store is designed to provide electrical backup energy for at least one energy consumer, wherein the energy EL that can be drawn from the backup energy store and/or the peak power Pmax that can be drawn from the backup energy store is determined and operational readiness is established as soon as the energy EL that can be drawn from the backup energy store has reached a definable minimum energy value and/or the peak power Pmax that can be drawn from the backup energy store has reached a definable minimum power value,
**characterized in that**
the energy EL that can be drawn from the backup energy store and/or the peak power Pmax that can be drawn from the backup energy store is determined by measuring a discharging process or by means of a charging process,
**and in that**
if the determination has the result that the energy EL that can be drawn from the backup energy store has not reached a definable minimum energy value and/or the peak power Pmax that can be drawn from the backup energy store has not reached a definable minimum power value, the backup energy store is first discharged by means of a discharging device in order to use the heat arising during discharging of the backup energy store at its internal resistance Ri for heating the backup energy store, independently of whether the backup energy store has too low a temperature or not.

2. Method to prepare a backup energy store for operation according to Claim 1, **characterized in that** the energy EL that can be drawn from the backup energy store and/or the peak power Pmax that can be drawn from the backup energy store is determined again after the discharging of the backup energy store to heat said backup energy store; and **in that** the backup energy store is recharged if the redetermination of the energy EL that can be drawn from the backup energy store and/or of the peak power Pmax that can be drawn from the backup energy store has the result that the energy EL that can be drawn from the backup energy store has not reached a definable minimum energy value and/or the peak power Pmax that can be drawn from the backup energy store has not reached a definable minimum power value.

3. Method to prepare a backup energy store for operation according to Claim 1 or 2, **characterized in that** the discharging process of the backup energy store takes place for a defined time period; or **in that** the time period is newly determined in the individual case during each discharging process.

4. Method to prepare a backup energy store for operation according to any of the preceding claims, **characterized in that** the determination of the energy EL that can be drawn from the backup energy store and/or of the peak power Pmax that can be drawn from the backup energy store is determined continuously during discharging.

5. Method to prepare a backup energy store for operation according to any of the preceding claims, **characterized in that,** prior to discharging the backup energy store, the backup energy store is charged by an amount so that, after discharging the backup energy store to heat said backup energy store, the energy EL that can be drawn from the backup energy store and/or the peak power Pmax that can be drawn from the backup energy store is sufficient to establish operational readiness.

6. Method to prepare a backup energy store for operation according to any of the preceding claims, **characterized in that** the discharging device includes the one energy consumer or at least one of the energy consumers.

7. Method to prepare a backup energy store for operation according to any of the preceding claims, **characterized in that** the limitation of the discharge current takes place by means of a pulse width modulation, wherein in particular the peak discharge current is limited to the maximum permissible pulse current of the circuit including the backup energy store and the discharging device.

8. Method to prepare a backup energy store for operation according to any of the preceding claims, **characterized in that** at least one physical variable that permits a statement about the core temperature of the one energy storage element or of the plurality of energy storage elements of the backup energy store is measured, the core temperature is calculated on the basis of the physical variable or physical variables, and the discharging of the backup energy store takes place at least until the core temperature has reached a definable temperature threshold value.

9. Method to prepare a backup energy store for operation according to Claim 8, **characterized in that** aging effects of the backup energy store that modify the correlation between the physical variable or physical variables and the core temperature are taken into account in the calculation of the core temperature.

10. Method to prepare a backup energy store for operation according to any of Claims 8 through 9, **characterized in that** the physical variable or physical variables include the capacitance C of the backup energy store and/or the internal resistance Ri of the backup energy store.

11. Method to prepare a backup energy store for operation according to any of the preceding claims, **characterized in that** the energy storage elements comprise capacitors, in particular ultracapacitors.

12. Method to prepare a pitch system for a wind power plant for operation, wherein the pitch system comprises at least one backup energy store having at least one energy storage element,
**characterized in that**
a method according to any of Claims 1 through 11 is applied to the one backup energy store or to at least one of the backup energy stores of the pitch system.

13. Computer program product having program instructions for executing a method according to any of the preceding claims.

14. Pitch system for a wind power plant, wherein the pitch system comprises at least one backup energy store having at least one energy storage element, **characterized in that**

the pitch system is designed to execute the method according to Claim 12.

15. Wind power plant having a pitch system according to Claim 14.

**Revendications**

1. Méthode pour préparation d'un accumulateur d'énergie pour opération comprenant au moins un élément accumulateur d'énergie, dans laquelle l'accumulateur d'énergie est conçu pour la fourniture d'énergie électrique d'urgence pour au moins un consommateur d'énergie, dans lequel l'énergie EL pouvant être extraite de l'accumulateur d'énergie et/ou la puissance de crête Pmax pouvant être extraite de l'accumulateur d'énergie est déterminée et la disponibilité opérationnelle est constatée, lorsque l'énergie EL pouvant être extraite de l'accumulateur d'énergie a atteint une valeur d'énergie minimale pouvant être définie et/ou lorsque la puissance de crête Pmax pouvant être extraite de l'accumulateur d'énergie a atteint une valeur de puissance minimale pouvant être définie, **caractérisée en ce que**

l'énergie EL pouvant être extraite de l'accumulateur d'énergie et/ou la puissance de crête Pmax pouvant être extraite de l'accumulateur d'énergie est déterminée par une mesure d'un processus de déchargement ou à travers un processus de chargement, **et que**

lorsque la détermination a pour résultat que l'énergie EL pouvant être extraite de l'accumulateur d'énergie n'a pas atteint une valeur d'énergie minimale et/ou la puissance de crête Pmax pouvant être extraite de l'accumulateur d'énergie n'a pas atteint une valeur de puissance minimale, l'accumulateur d'énergie est d'abord déchargé à travers un dispositif de déchargement, pour utiliser la chaleur engendrée lors du déchargement de l'accumulateur d'énergie dans la résistance interne Ri de celui-ci pour réchauffer l'accumulateur d'énergie, indépendamment de savoir si l'accumulateur d'énergie présente ou non une température trop basse.

2. Méthode pour préparation d'un accumulateur d'énergie pour opération selon la revendication 1, **caractérisée en ce que** l'énergie EL pouvant être extraite de l'accumulateur d'énergie et/ou la puissance de crête Pmax pouvant être extraite de l'accumulateur d'énergie est déterminée de nouveau après le déchargement de l'accumulateur d'énergie pour le réchauffement de l'accumulateur d'énergie qui est chargé de nouveau, lorsque la nouvelle détermination de l'énergie EL pouvant être extraite de l'accumulateur d'énergie et/ou de la puissance de crête Pmax pouvant entre extraite de l'accumulateur d'énergie a pour résultat que l'énergie EL pouvant être extraite de l'accumulateur d'énergie n'a pas atteint une valeur d'énergie minimale pouvant être définie et/ou la puissance de crête Pmax pouvant être extraite de l'accumulateur d'énergie n'a pas atteint une valeur de puissance minimale pouvant être définie.

3. Méthode pour préparation d'un accumulateur d'énergie pour opération selon la revendication 1 ou 2, **caractérisée en ce que** le processus de déchargement de l'accumulateur d'énergie est effectué pendant une période de temps définie ou que la période de temps est déterminée dans le cas individuel lors de chaque processus de déchargement.

4. Méthode pour préparation d'un accumulateur d'énergie pour opération selon l'une quelconque des revendications précédentes, **caractérisée en ce que** la détermination de l'énergie EL pouvant être extraite de l'accumulateur d'énergie et/ou la puissance de crête Pmax pouvant être extraite de l'accumulateur d'énergie est déterminée en continu durant le déchargement.

5. Méthode pour préparation d'un accumulateur d'énergie pour opération selon l'une quelconque des revendications précédentes, **caractérisée en ce que,** avant le déchargement de l'accumulateur d'énergie, l'accumulateur d'énergie est chargé d'un certain montant, de telle sorte que, après le déchargement de l'accumulateur d'énergie pour le réchauffement de l'accumulateur d'énergie, l'énergie EL pouvant être extraite de l'accumulateur d'énergie et/ou la puissance de crête Pmax pouvant être extraite de l'accumulateur d'énergie est suffisante pour déterminer la disponibilité opérationnelle.

6. Méthode pour préparation d'un accumulateur d'énergie pour opération selon l'une quelconque des revendications précédentes, **caractérisée en ce que** le dispositif de déchargement comprend l'un consommateur d'énergie ou au moins un des consommateurs d'énergie.

7. Méthode pour préparation d'un accumulateur d'énergie pour opération selon l'une quelconque des revendications précédentes, **caractérisée en ce que** la limitation du courant de décharge est effectuée par une modulation de largeur d'impulsion, le courant de décharge de crête en particulier étant limité à un courant d'impulsion maximal autorisé du circuit électrique comprenant l'accumulateur d'énergie et le dispositif de déchargement.

**8.** Méthode pour préparation d'un accumulateur d'énergie pour opération selon l'une quelconque des revendications précédentes, **caractérisé en ce qu'**au moins une grandeur physique, qui permet une déclaration sur la température à cœur de l'un élément accumulateur d'énergie ou des plusieurs éléments accumulateurs d'énergie, est mesurée, la température à cœur est calculée sur la base de la grandeur physique ou des grandeurs physiques et le déchargement de l'accumulateur d'énergie est effectué jusqu'à ce que la température à cœur ait atteint une valeur seuil de température pouvant été définie.

**9.** Méthode pour préparation d'un accumulateur d'énergie pour opération selon la revendication 8, **caractérisée en ce que** lors du calcul de la température à cœur, des effets de vieillissement de l'accumulateur d'énergie, qui modifient le rapport entre la grandeur physique ou les grandeurs physiques et la température cœur, sont pris en compte.

**10.** Méthode pour préparation d'un accumulateur d'énergie pour opération selon l'une quelconque des revendications 8 à 9, **caractérisée en ce que** la grandeur physique ou les grandeurs physiques comprennent la capacité C de l'accumulateur d'énergie et/ou la résistance interne Ri de l'accumulateur d'énergie.

**11.** Méthode pour préparation d'un accumulateur d'énergie pour opération selon l'une quelconque des revendications précédentes, **caractérisée en ce que** les éléments accumulateurs d'énergie présentent des condensateurs, en particulier des ultracondensateurs.

**12.** Méthode pour préparation d'un accumulateur d'énergie pour opération d'un système de pas pour une éolienne, dans laquelle le système de pas présente au moins un accumulateur d'énergie comprenant au moins un élément accumulateur d'énergie, **caractérisée en ce que**
un procédé selon l'une quelconque des revendications 1 à 11 est appliqué à un accumulateur d'énergie du système de pas.

**13.** Produit de programme informatique comprenant des instructions de programme pour l'exécution d'un procédé selon l'une quelconque des revendications précédentes.

**14.** Système de pas pour une éolienne, dans lequel le système de pas présente au moins un accumulateur d'énergie comprenant au moins un élément accumulateur d'énergie, **caractérisé en ce que**
le système de pas est conçu pour l'exécution du procédé selon la revendication 12.

**15.** Éolienne comprenant un système de pas selon la revendication 14.

**EP 3 192 145 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5362942 A
- EP 2578876 A1
- EP 1908622 A1

- CA 2448536 A1
- US 20120153877 A1
- DE 102013218069 A1